# EUROPEAN PATENT SPECIFICATION

(11) **EP 1 148 745 B1**
(45) Date of publication and mention of the grant of the patent: **28.01.2004**
(21) Application number: 01303211.5
(22) Date of filing: 05.04.2001
(51) Int. Cl.: H04Q 7/22

(54) **Shopping assistance method and service system**
Verfahren und Dienstsystem zur Einkaufsunterstützung
Procède et système de services destinés à l'assistance à l'achat

(30) Priority: 20.04.2000 GB 0009658
(43) Date of publication of application: 24.10.2001
(73) Proprietor: Hewlett-Packard Company, Palo Alto, CA 94304 (US)
(72) Inventor: L'Anson, Colin, Frenchay, Bristol BS16 1JL (GB); McDonnell, James Thomas Edward, Clifton, Bristol BS8 2JU (GB); Spratt, Michael P., Weston, Bath BA1 2XN (GB); Waters, John Deryk, Combe Down, Bath BA2 5AN (GB); Crouch, Simon E., Chippenham, Wiltshire SN14 6DR (GB)
(74) Representative: Squibbs, Robert Francis

(56) References cited:
- EP-A- 0 853 287
- WO-A-00/04730

## Description

### Field of the Invention

The present invention relates to a shopping assistance service method and system whereby a mobile user can obtain information about the availability of goods and services from local traders. In the present specification, "availability" is to be understood broadly to mean obtainable through a trader and not just currently in stock with that trader.

### Background of the Invention

Communication infrastructures suitable for mobile users (in particular, though not exclusively, cellular radio infrastructures) have now become widely adopted. Whilst the primary driver has been mobile telephony, the desire to implement mobile data-based services over these infrastructures, has led to the rapid development of data-capable bearer services across such infrastructures. This has opened up the possibility of many Internet-based services being available to mobile users.

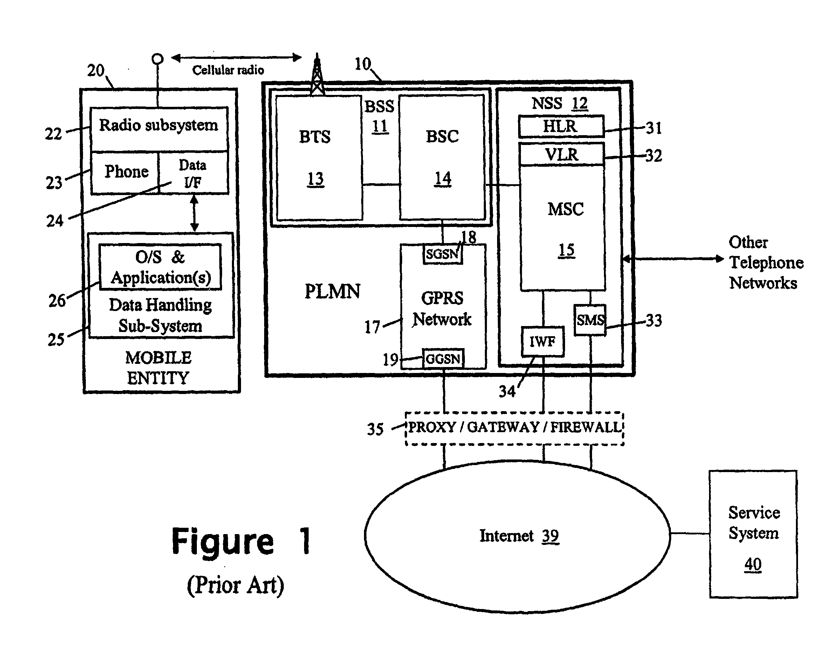

By way of example, Figure 1 shows one form of known communication infrastructure for mobile users providing both telephony and data-bearer services. In this example, amobile entity 20, provided with a radio subsystem 22 and a phone subsystem 23, communicates with the fixed infrastructure of GSM PLMN (Public Land Mobile Network) 10 to provide basic voice telephony services. In addition, the mobile entity 20 includes a data-handling subsystem 25 interworking, via data interface 24, with the radio subsystem 22 for the transmission and reception of data over a data-capable bearer service provided by the PLMN; the data-capable bearer service enables the mobile entity 20 to communicate with a service system 40 connected to the public Internet 39. The data handling subsystem 25 supports an operating environment 26 in which applications run, the operating environment including an appropriate communications stack.

More particularly, the fixed infrastructure 10 of the GSM PLMN comprises one or more Base Station Subsystems (BSS) 11 and a Network and Switching Subsystem NSS 12. Each BSS 11 comprises a Base Station Controller (BSC) 14 controlling multiple Base Transceiver Stations (BTS) 13 each associated with a respective "cell" of the radio network. When active, the radio subsystem 22 of the mobile entity 20 communicates via a radio link with the BTS 13 of the cell in which the mobile entity is currently located. As regards the NSS 12, this comprises one or more Mobile Switching Centers (MSC) 15 together with other elements such as Visitor Location Registers 32 and Home Location Register 32.

When the mobile entity 20 is used to make a normal telephone call, a traffic circuit for carrying digitised voice is set up through the relevant BSS 11 to the NSS 12 which is then responsible for routing the call to the target phone (whether in the same PLMN or in another network).

With respect to data transmission to/from the mobile entity 20, in the present example three different data-capable bearer services are depicted though other possibilities exist. A first data-capable bearer service is available in the form of a Circuit Switched Data (CSD) service; in this case a full traffic circuit is used for carrying data and the MSC 32 routes the circuit to an InterWorking Function IWF 34 the precise nature ofwhich depends on what is connected to the other side of the IWF. Thus, IWF could be configured to provide direct access to the public Internet 39 (that is, provide functionality similar to an IAP - Internet Access Provider IAP). Alternatively, the IWF could simply be a modem connecting to a PSTN; in this case, Internet access can be achieved by connection across the PSTN to a standard IAP.

A second, low bandwidth, data-capable bearer service is available through use of the Short Message Service that passes data carried in signalling channel slots to an SMS unit which can be arranged to provide connectivity to the public Internet 39.

A third data-capable bearer service is provided in the form of GPRS (General Packet Radio Service which enables IP (or X.25) packet data to be passed from the data handling system of the mobile entity 20, via the data interface 24, radio subsystem 21 and relevant BSS 11, to a GPRS network 17 of the PLMN 10 (and vice versa). The GPRS network 17 includes a SGSN (Serving GPRS Support Node) 18 interfacing BSC 14 with the network 17, and a GGSN (Gateway GPRS Support Node) interfacing the network 17 with an external network (in this example, the public Internet 39). Full details of GPRS can be found in the ETSI (European Telecommunications Standards Institute) GSM 03.60 specification. Using GPRS, the mobile entity 20 can exchange packet data via the BSS 11 and GPRS network 17 with entities connected to the public Internet 39.

The data connection between the PLMN 10 and the Internet 39 will generally be through a firewall 35 with proxy and/or gateway functionality.

Different data-capable bearer services to those described above may be provided, the described services being simply examples of what is possible.

In Figure 1, a service system 40 is shown connected to the Internet 40, this service system being accessible to the OS/application 26 running in the mobile entity by use of any of the data-capable bearer services described above. The data-capable bearer services could equally provide access to a service system that is within the domain of the PLMN operator or is connected to another public or private data network.

With regard to the OS/application software 26 running in the data handling subsystem 25 of the mobile entity 20, this could, for example, be a WAP application running on top of a WAP stack where "WAP" is the Wireless Application Protocol standard. Details of WAP can be found, for example, in the book "Official Wireless Application Protocol" Wireless Application Protocol Forum, Ltd published 1999 Wiley Computer Publishing. Where the OS/application software is WAP compliant, the firewall will generally also serve as a WAP proxy and gateway. Of course, OS/application 26 can comprise other functionality (for example, an e-mail client) instead of, or additional to, the WAP functionality.

The mobile entity 20 may take many different forms. For example, it could be two separate units such as a mobile phone (providing elements 22-24) and a mobile PC (data-handling system 25) coupled by an appropriate link (wireline, infrared or even short range radio system such as Bluetooth). Alternatively, mobile entity 20 could be a single unit such as a mobile phone with WAP functionality. Of course, if only data transmission/reception is required (and not voice), the phone functionality 24 can be omitted; an example of this is a PDA with built-in GSM data-capable functionality whilst another example is a digital camera (the data-handling subsystem) also with built-in GSM data-capable functionality enabling the upload of digital images from the camera to a storage server.

Whilst the above description has been given with reference to a PLMN based on GSM technology, it will be appreciated that many other cellular radio technologies exist and can typically provide the same type of functionality as described for the GSM PLMN 10.

Recently, much interest has been shown in "location-based", "location-dependent", or "location-aware" services for mobile users, these being services that take account of the current location of the user (or other mobile party). The most basic form of this service is the emergency location service whereby a user in trouble can press a panic button on their mobile phone to send an emergency request-for-assistance message with their location data appended. Another well known location-based service is the provision of traffic and route-guiding information to vehicle drivers based on their current position. A further known service is a "yellow pages" service where a user can find out about amenities (shops, restaurants, theatres, etc.) local to their current location. The term "location-aware services" will be used herein to refer generically to these and similar services where a location dependency exists.

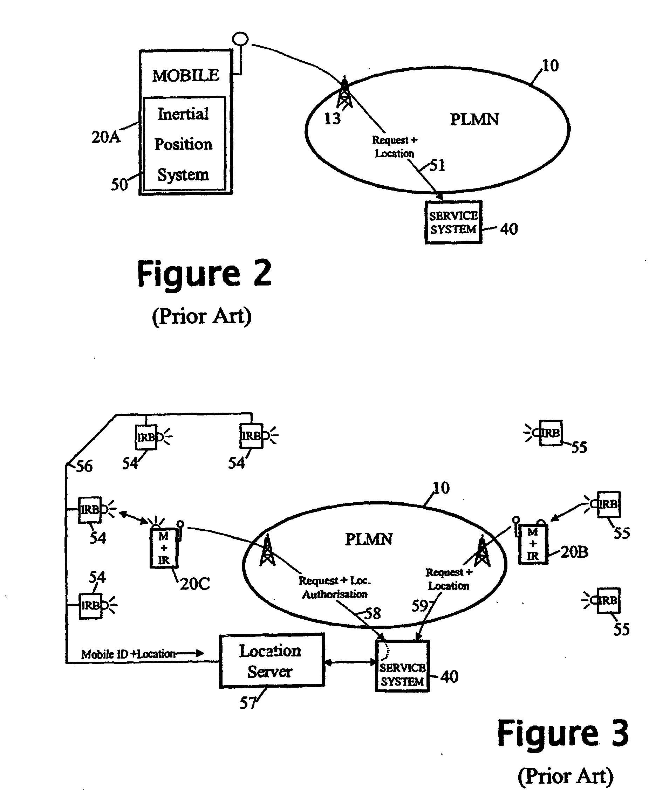

Location-aware services all require user location as an input parameter. A number of methods already exist for determining the location of a mobile user as represented by an associated mobile equipment. Example location-determining methods will now be described with reference to Figures 2 to 5. As will be seen, some of these methods result in the user knowing their location thereby enabling them to transmit it to a location-aware service they are interested in receiving, whilst other of the methods result in the user's location becoming known to a network entity from where it can be supplied directly to a location-aware service (generally only with the consent of the user concerned). It is to be understood that additional methods to those illustrated in Figures 2 to 5 exist.

As well as location determination, Figures 2 to 5 also illustrate how the mobile entity requests a location-aware service provided by service system 40. In the present examples, the request is depicted as being passed over a cellular mobile network (PLMN 10) to the service system 40. The PLMN is, for example, similar to that depicted in Figure 1 with the service request being made using a data-capable bearer service of the PLMN. The service system 40 may be part of the PLMN itself or connected to it through a data network such as the public Internet. It should, however, be understood that infrastructure other than a cellular network may alternatively be used for making the service request

The location-determining method illustrated in Figure 2 uses an inertial positioning system 50 provided in the mobile entity 20A, this system 50 determining the displacement of the mobile entity from an initial reference position. When the mobile entity 20A wishes to invoke a location-aware service, it passes its current position to the corresponding service system 40 along with the service request 51. This approach avoids the need for an infrastructure to provide an external frame of reference; however, cost, size and long-term accuracy concerns currently make such systems unattractive for incorporation into mass-market handheld devices.

Figure 3 shows two different location-determining methods both involving the use of local, fixed-position, beacons here shown as infra-red beacons IRD though other technologies, such as short-range radio systems (in particular, "Bluetooth" systems) may equally be used. The right hand half of Figure 3 show a number of independent beacons 55 that continually transmit their individual locations. Mobile entity 20B is arranged to pick up the transmissions from a beacon when sufficiently close, thereby establishing its position to the accuracy of its range of reception. This location data can then be appended to a request 59 made by the mobile entity 20B to a location-aware service available from service system 40. A variation on this arrangement is for the beacons 55 to transmit information which whilst not directly location data, can be used to look up such data (for example, the data may be the Internet home page URL of a store housing the beacon 55 concerned, this home page giving the store location - or at least identity, thereby enabling look-up of location in a directory service).

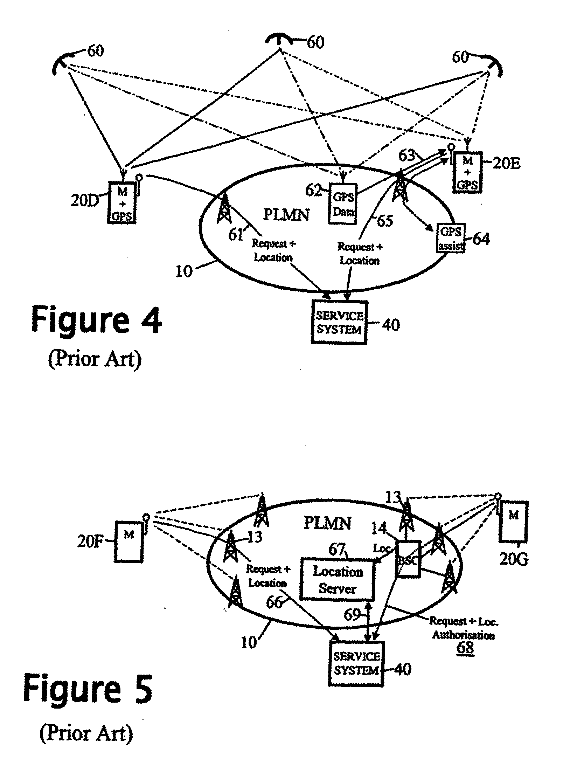

In the left-hand half of Figure 3, the IRB beacons 54 are all connected to a network that connects to a location server 57. The beacons 54 transmit a presence signal and when mobile entity 20C is sufficiently close to a beacon to pick up the presence signal, it responds by sending its identity to the beacon. (Thus, in this embodiment, both the beacons 54 and mobile entity 20C can both receive and transmit IR signals whereas beacons 55 only transmit, and mobile entity 20B only receives, IR signals). Upon a beacon 54 receiving a mobile entity's identity, it sends out a message over network 56 to location server 57, this message linking the identity of the mobile entity 20C to the location of the relevant beacon 54. Now when the mobile entity wishes to invoke a location-aware service provided by the service system 40, since it does not know its location it must include it's identity in the service request 58 and rely on the service system 40 to look up the current location of the mobile entity in the location server 57. Because location data is personal and potentially very sensitive, the location server 57 will generally only supply location data to the service system 40 after the latter has produced an authorizing token supplied by the mobile entity 20B in request 58. It will be appreciated that whilst service system 40 is depicted as handling service requests form both types of mobile entity 20 B and 20C, separate systems 40 may be provided for each mobile type (this is likewise true in respect of the service systems depicted in Figures 4 and 5).

Figure 4 depicts several forms of GPS location-determining system. On the left-hand side of Figure 4, a mobile entity 20D is provided with a standard GPS module and is capable of determining the location of entity 20D by picking up signals from satellites 60. The entity 20D can then supply this location when requesting, in request 61, a location-aware service from service system 40.

The right-hand side of Figure 4 depicts, in relation to mobile entity 20E, twoways in which assistance can be provided to the entity in deriving location from GPS satellites. Firstly, the PLMN 10 can be provided with fixed GPS receivers 62 that each continuously keep track of the satellites 60 visible from the receiver and pass information in messages 63 to local mobile entities 20E as to where to look for these satellites and estimated signal arrival times; this enables the mobile entities 20E to substantially reduce acquisition time for the satellites and increase accuracy of measurement (see "Geolocation Technology Pinpoints Wireless 911 calls within 15 Feet" 1-Jul-99 Lucent Technologies, Bell Labs). Secondly, as an alternative enhancement, the processing load on the mobile entity 20E can be reduced and encoded jitter removed using the services of network entity 64 (in or accessible through PLMN 10).

One the mobile unit 20E has determined its location, it can pass this information in request 65 when invoking a location-aware service provided by service system 40.

Figure 5 depicts two general approaches to location determination from signals present in a cellular radio infrastructure. First, it can be noted that in general both the mobile entity and the network will know the identity of the cell in which the mobile entity currently resides, this information being provided as part of the normal operation of the system. (Although in a system such as GSM, the network may only store current location to a resolution of a collection of cells known as a "location area", the actual current cell ID will generally be derivable from monitoring the signals exchanged between the BSC 14 and the mobile entity). Beyond current basic cell ID, it is possible to get a more accurate fix by measuring timing and/or directional parameters between the mobile entity and multiple BTSs 13, these measurement being done either in the network or the mobile entity (see, for example, International Application WO 99/04582 that describes various techniques for effecting location determination in the mobile and WO 99/55114 that describes location determination by the mobile network in response to requests made by location-aware applications to a mobile location center - server- of the mobile network).

The left-hand half of Figure 5 depicts the case of location determination being done in the mobile entity 20F by, for example, making Observed Time Difference (OTD) measurements with respect to signals from BTSs 13 and calculating location using a knowledge of BTS locations. The location data is subsequently appended to a service request 66 sent to service system 40 in respect of a location-aware service. The calculation load on mobile entity 20F could be reduced and the need for the mobile to know BTS locations avoided, by having a network entity do some of the work. The right-hand half of Figure 5 depicts the case of location determination being done in the network, for example, by making Timing Advance measurements for three BTSs 13 and using these measurements to derive location (this derivation typically being done in a unit associated with BSC 14). The resultant location data is passed to a location server 67 from where it can be made available to authorised services. As for the mobile entity 20C in Figure 3, when the mobile entity 20G of Figure 5 wishes to invoke a location-aware service available on service system 50, it sends a request 69 including an authorisation token and its ID (possible embedded in the token) to the service system 40; the service system then uses the authorisation token to obtain the current location of the mobile entity 20G from the location server 67.

In the above examples, where the mobile entity is responsible for determining location, this will generally be done only at the time the location-aware service is being requested. Where location determination is done by the infrastructure, it may be practical for systems covering only a limited number of users (such as the system illustrated in the left-hand half of Figure 2 where a number of infrared beacons 54 will cover a generally fairly limited) for location-data collection to be done whenever a mobile entity is newly detected by an IRB, this data being passed to location server 57 where it is cached for use when needed. However, for systems covering large areas with potentially a large number of mobile entities, such as the Figure 5 system, it is more efficient to effect location determination as and when there is a perceived need to do so; thus, location determination may be triggered by the location server 67 in response to the service request 68 from the mobile entity 20G or the mobile entity may, immediately prior to making request 68, directly trigger BSC 14 to effect a location determination and feed the result to location server 67.

Further with respect to the location servers 57, 67, whilst access authorisation by location-aware services has been described as being through authorisation tokens supplied by the mobile entities concerned, other authorisation techniques can be used. In particular, a location-aware service can be prior authorised with the location server in respect of particular mobile entities; in this case, each request from the service for location data needs only to establish that the request comes from a service authorised in respect of the mobile entity for which the location data is requested.

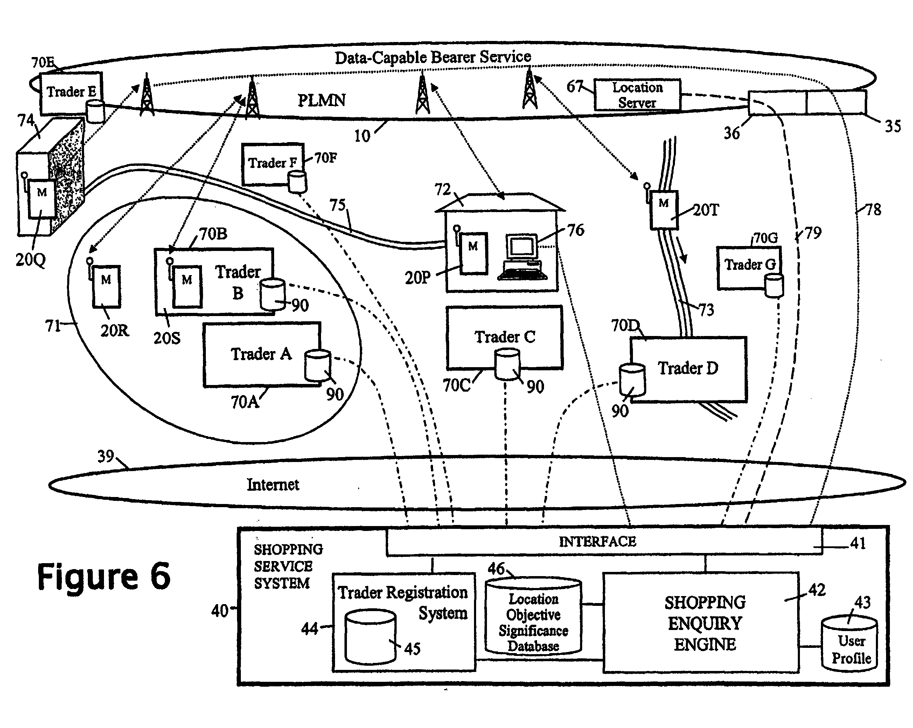

As already indicated, Figures 2 to 5 depict only some examples of how location determination can be achieved, there being many other possible combinations of technology used and where in the system the location-determining measurements are made and location is calculated, stored and used .Thus, the location-aware service may reside in the mobile entity whose location is of interest, in a network-connected service system 40 (as illustrated), or even in another mobile entity. Furthermore, whilst in the examples of Figures 2 to 5, invocation of the location-aware service has been by the mobile entity whose location is of interest, the nature of the location-aware service may be such that it is invoked by another party (including, potentially, the PLMN itself). In this case, unless the invoking party already knows the location of he mobile entity and can pass this information to the location-aware service (which may, for example, may be situation where the PLMN invokes the service), it is the location-aware service that is responsible for obtaining the required location data, either by sending a request to the mobile entity itself or by requesting the data from a location server. Unless the location server already has the needed information in cache, the server proceeds to obtain the data either by interrogating the mobile entity or by triggering infrastructure elements to locate the mobile. For example, where a location-aware service running on service system 40 in Figure 5 needs to find the location of mobile 20G, it could be arranged to do so by requesting this information from location server 67 which in turn requests the location data from the relevant BSC, the latter then making the necessary determination using measurements from BTSs 13. Figure 6 depicts the various possibilities discussed above.

Although in the foregoing, the provision of location data through the mobile radio infrastructure to the mobile entity has been treated as a service effected over a data-capable bearer channel, it may be expected that as location data becomes considered a basic element of mobile radio infrastructure services, provision will be made in the relevant mobile radio standards for location data to be passed over a signalling channel to the mobile entity.

The present invention concerns a shopping assistance service whereby a mobile user can obtain information about the availability of goods and services from local traders. It is known to provide shopping brokerage services which, in response to a user enquiry, determine where specified goods / services are available. It is also known to take account of a mobile user's current location in providing information about local traders. Thus, for example, WO 0004730 (Signalsoft Corp.) describes an arrangement in which a user with a mobile phone makes an enquiry to an intelligent network platform, the platform being provided with the user's location as determined by the mobile phone network and having access to subscriber profile ans service information databases. The geographical coverage of the search is set either on the bases ofa radius from the user's current location or according to the predefined boundaries of a current area in which the user is located.

It is an object of the present invention to provide an improved location-aware shopping assistance service method and system.

### Summary of the Invention

According to the present invention, there is provided a shopping assistance method, comprising the following steps carried out by a service system:
- receiving a shopping enquiry from a remote enquirer;
- obtaining the geographic location of the enquiry;
- using the enquiry location to determine what locations are to be covered in a search for an answer to the shopping enquiry;
- carrying out said search in conformity with the determined coverage; and
- returning the search results to the enquirer;
**characterised in that** the coverage of the search is determined in dependence on an objective significance attributed to the enquiry location through a database lookup, this objective significance being indicative of a functional purpose associated with the enquiry location.

According to another aspect of the present invention, there is provided a shopping-assistance service system, comprising:
- an input subsystem for receiving a shopping enquiry from a remote enquirer;
- a location subsystem for determining the geographic location of the enquiry;
- search location-coverage means operative to use the enquiry location to determine what locations are to be covered in a search for an answer to the shopping enquiry;
- a search subsystem for carrying out said search in conformity with the coverage determined by the search location-coverage means; and
- an output subsystem for returning the search results to the enquirer;
characterised **in that** the search location-coverage means comprises:
- a database subsystem for attributing an objective significance to the enquiry location through a database lookup, this objective significance being indicative of a functional purpose associated with the enquiry location, and
- means for determining the search coverage on the basis of the objective significance of the enquiry location..

### Brief Description of the Drawings

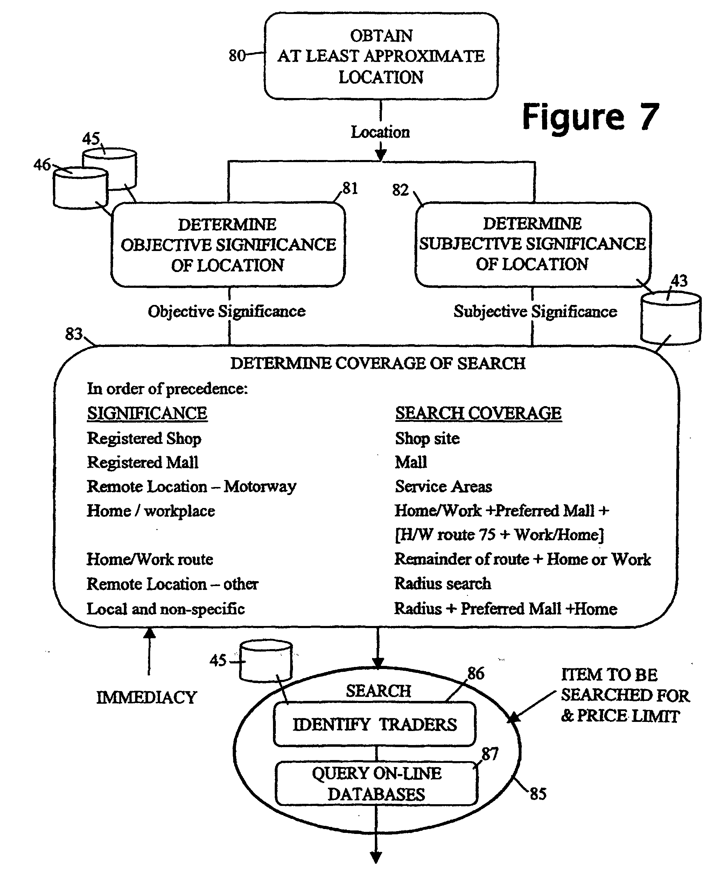

A shopping assistance method and service-system, both embodying the present invention, will now be described, by way of non-limiting example, with reference to the accompanying diagrammatic drawings, in which:
. **Figure 1** is a diagram of a known communications infrastructure usable for transferring voice and data to/from a mobile entity;
. **Figure 2** is a diagram illustrating one known approach to determining the location of a mobile entity, this approach involving providing the entity with an inertial positioning system;
. **Figure 3** is a diagram illustrating another known approach to determining the location of a mobile entity, this approach being based on proximity of the mobile entity to fixed-position local beacons;
. **Figure 4** is a diagram illustrating a further known approach to determining the location of a mobile entity, this approach involving the use of GPS satellites;
. **Figure 5** is a diagram illustrating a still further approach to determining the location of a mobile entity, this approach being based on the use of signals present in a cellular mobile radio communications system;
. **Figure 6** is a diagram illustrating the service method and system of the present invention; and
. **Figure 7** is a diagram illustrating the use of objective and subjective interpretations of an enquirer's location in determining the coverage of a search conducted by the Figure 6 system.

### Best Mode of Carrying Out the Invention

The shopping assistance service method and system embodying the invention will now be described with reference to Figure 6 which shows the service system 40 as connected to the public Internet 39. It is to be understood that the present invention is not limited to the specifics of the mobile entity 20, location discovery means, and communication infrastructure shown in Figure 6; the generalisations discussed above in relation to Figure 1 to 5 regarding these elements apply equally to the operational context of the service system 40. Furthermore, whilst the service system 40 is shown as connected to the public Internet, it could be connected to the GPRS network 17 or to another fixed data network interfacing directly or indirectly with the network 17 or network 39; it will also be appreciated that any appropriate data-capable bearer service (not just GPRS) can be used for passing data through PLMN 10.

In the Figure 6 embodiment, a user with mobile entity 20 moves between a number of different locations as depicted by the presence of the mobile entity at each location with a corresponding suffix letter. Thus:
- mobile entity 20P represents the user as present at home 72;
- mobile entity 20Q represents the user as present at work 74;
- mobile entity 20R represents the user as present in a shopping mall;
- mobile entity 20S represents the user as present inside a shop 70B;
- mobile entity 20T represents the user as present in a vehicle travelling along a motorway, autoroute or freeway 73 remote from the user's normal locality.

A number of different traders 70 are also depicted in Figure 6, individually identified by suffix letters A to G. Traders 70A and 70B are located in shopping mall 71, trader 70C is located close to the user's home 72, trader 70E is located near to the user's place of work 74, trader 70F is located close to the route 75 followed by the user between home and work, trader 70G is located remotely from the user's locality, and trader 70D is located at a motorway service area on motorway 73 also remote from user's locality.

The mobile entity 20 can communicate with a shopping assistance service system 40 via PLMN 10 and internet 39 to make enquiries about the availability of specified goods or services. The user is pre-registered with the service and details of the user are held in a user profile stored in user-profile database 43 of the service system 40. Similarly, traders 70 are registered with a trader registration system 44 of the service system 40, the details of the traders, including their locations and contact details for respective on-line product/service databases 90 maintained by each trader, are held in database 45.

Considering in more detail how an availability enquiry is made, the data handling subsystem 25 (as in Figure 1) of mobile entity 20 runs a shopping aid application (for example, a WAP application) by which the user can identify an item (goods / services) of interest and request information about the local availability of the item. The user's shopping enquiry is passed (see dotted line 78) via a data-capable bearer service of PLMN 10, WAP gateway 35, internet 39, and interface 41 of the shopping-assistance service system 40, to a shopping enquiry engine 42. The enquiry engine 42 processes the enquiry by determining the location of the mobile entity 20, attributing a significance to the enquiry location, determining a search coverage having regard to the significance of the enquiry location, ascertaining from trader database 45 which traders 70 are appropriate to the search coverage and item of interest, and then conducting the search by querying the on-line database systems 90 of those traders. The results of the search are then reported back to the mobile entity 20 (this reporting back usually being done immediately using the same channel as used by the enquiry - however, the report back can also be done indirectly, such as by e-mail sent to the user, by printing out a paper report for mailing, etc.).

In the Figure 6 embodiment, the enquiry location is determined by the enquiry engine 42 by a request/response exchange 79 with a location server 67 of the PLMN 10 (effected via an appropriate interface 36 of PLMN 10). The enquiry location can, however, be obtained by any other suitable method including by incorporation in the enquiry by mobile entity 20 and subsequent extraction by the engine 42.

Figure 7 depicts how enquiry location is used to influence the search. After the enquiry location has been determined (block 80), both the objective and subjective significances of the location are derived (blocks 81 and 82 respectively). The objective significance of a location is the function associated with that location (precedence being given to a specific shopping related function, if there are several associated functions). Typical functions are shop, shopping area (e.g. a mall), airport, motorway, road, etc. For the present purpose of finding out about availability of goods/services, shops are only considered to be such if they are registered with the service system (or an associated system where service systems 40 covering different geographical areas are associated together to give a wider geographical coverage). Whilst only considering registered shops as being "shops" ensures that all the shops considered have on-line searchable databases 90, other shops may well also have such databases and the primary reason only to include registered shops is to encourage shops to sign up to the shopping service and pay a registration fee). By only considering registered shops as being shops, checking whether an enquiry location has an objective significance of "shop" is readily effected by looking in the database 45. The objective significance of other locations is checked by referring to database 46. Shopping zones are only treated as such if they contain one or more registered shops.

The subjective significance of the enquiry location is a significance pre-attributed by the user and held in the user profile stored in database 43. Thus, a location corresponding to the user's home 72 is given a subjective significance of "home". The following set of subjective significance categories are, for example, specified by the user:

| | |
|---|---|
| Home | The user's home zone (e.g. within 100 metres of home); |
| Work | The user's work place zone; |
| Home/work route | The route normally taken by the user between home and work; |
| Local | The locality in which the user lives (e.g. within 20 km radius of home); |
| Remote | Any location not falling in one of the above categories. |

After the objective and subjective significances of the enquiry location has been determined, the coverage of the search is derived, taking account of these significances (block 85 in Figure 7). The search is then conducted (process 85), the traders relevant to the coverage area and item of interest being first ascertained (step 86) and then the corresponding on-line databases 90 queried (step 87). Thus, in the present example, if the user is located within a registered shop (see mobile entity 20S in Figure 6), the user's availability enquiry results in a search confined to that shop, whereas if the user is in a shopping mall 71 but not in any registered shop in the mall (see mobile entity 20R), the search is directed solely at traders in the shopping mall.

Where the user makes the shopping enquiry either from home (mobile entity 20P) or from work (mobile entity 20Q), the search is carried out in the user's preferred shopping mall and in a domain around the location concerned, this domain being pre-specified by the user. If the enquiry is received during the working day, then additional domains are also searched, these being a pre-specified domain extending along the home/work route of the user and the domain at the other end of this route - in this case, the work/home domain. The extent of these domains is stored in the user's profile in user-profile database 43 (default values for the extent of a domain are used if the user has omitted to specify this extent).

Where a user makes a shopping enquiry whilst travelling between home and work (route 75), then the search is restricted to the home/work route domain and the home/work domain being travelled towards (determined either by time of day or by taking successive location fixes); preferably, the home/work route domain is restricted to that part corresponding to the part of the route yet to be traversed.

For other locations local to the user, the search is carried out in respect of traders in the user's preferred shopping mall, in the pre-specified home domain, and within a given radius of the enquiry location.

For remote locations which are not workplace or home/work route locations, the search is carried in respect of traders within a given radius of the enquiry location unless the enquiry location is on a motorway (see mobile entity 20T on motorway 73) in which case, the search is initially directed to the nearest service area having regard to the direction of vehicle travel (as determined by successive location fixes).

The foregoing relationships between enquiry-location significances and search coverage are summarised below in order of precedence together with the identity of the trader(s) that would be queried in the case of the Figure 6 example.

| SIGNIFICANCE | SEARCH COVERAGE | TRADERS SEARCHED (Fig 6) |
|---|---|---|
| Registered Shop | Shop | B |
| Registered Mall | Shopping Mall | A, B |
| Local and non-specific | Radius + Preferred Mall +Home | A, B, C |
| Home /workplace | Home/Work +Preferred Mall + [H/W route + Work/Home] | A, B, C/E [F, E/C] |
| Home/Work route | Remainder of route + Home or Work | F, C/E |
| Remote Motorway | Service Areas | D |
| Remote Location - other | Radius search | G |

As can be seen, the first two rows in the above table concern objective significances. If a location has one of these objective significances, it is not necessary to consider the subjective significance of the location. It may therefore be advantageous to defer determination of subjective significance until the objective significance has been derived and tested to see if one of the first two rows applies.

The search coverage may be influenced by parameters additional to location significance. Thus, as already indicated, time of day and day of week can affect the choice of search coverage. Another parameter that can be used is immediacy of the need for the item concerned - if the user actually wants to purchase the item of interest immediately, then the user is probably less interested in traders at the user's usual shopping mall and more interested in the traders closest to the user.

Of course, the search has parameters other than just coverage, including, in particular the item of interest and, potentially, a maximum price the user is willing to pay for the item.

The results returned from the queried trader databases 90 preferably indicate whether the item of interest is in stock, not in stock but obtainable with a stated delay, or not stocked or orderable at all. If the initial coverage determined for a search results in no positive result for availability of the item concerned, then the enquiry engine 42 can be arranged to progressively enlarge the coverage of the search until a positive result is achieved.

The above-described objective and subjective significances and theiruse in combination to determine search coverage are by way of example only and many variations of greater and lesser complexity are possible. Indeed, the search coverage could be controlled by one type of location significance (objective or subjective) without involving the other.

Whilst in the foregoing, the shopping enquiries have been passed using mobile entity 20, it would be possible to use other equipment for at least certain of the enquiries. In particular, the user can use their home PC 76 to make enquiries from home, the enquiry location either being manually input by the user through the PC or else the enquiry engine determining the user's location automatically in some manner (for example, the client application running in the user's system - mobile entity 20 or PC 76 - could be required to pass the service system the calling line ID associated with the user's system, it being assumed in this case that the PC 76 accesses the internet 39 through a dial-up service).

The shopping mall domain was described above as being searched in a number of situations beyond when the user is present in the mall. It would, of course, also be possible to identify a list of shops that the user wanted to include in any similar search. The list of these shops could be derived from the user's own accounting software used for keeping payment records. In fact, it is preferred to consolidate this list into one or more preferred shopping zones.

It will be appreciated that one enquiry can contain availability requests for several different items and in this case the enquiry engine 42 will carry out searches in respect of each item and consolidate the responses it receives from trader database systems 90 before replying to the enquirer. Furthermore, the enquirer on receiving a reply from the service system (in respect of one or multiple items) can be,enabled to reserve or purchase the item by sending back a corresponding instruction to the service system which thereupon contacts the appropriate trader system to pass on the reserve/purchase instruction ( possibly with addition of details of the enquirer extracted from the user-profile database).

## Claims

1. A shopping assistance method, comprising the following steps carried out by a service system (40):
- receiving a shopping enquiry from a remote enquirer;
- obtaining (80) the geographic location of the enquiry;
- using the enquiry location to determine (81-83) what locations are to be covered in a search for an answer to the shopping enquiry;
- carrying out said search (85) in conformity with the determined coverage; and
- returning the search results to the enquirer;
**characterised in that** the coverage of the search is determined in dependence on an objective significance attributed to the enquiry location through a database lookup (81), this objective significance being indicative of a functional purpose associated with the enquiry location.

2. A method according to claim 1, wherein the enquiry-location significance is used to determine the coverage ofthe search by being used to set one or more of the following as a search parameter:
- particular trading premises;
- a particular shopping zone.

3. A method according to claim 1 or claim 2, wherein attributing an objective significance to the enquiry location involves checking a database of traders and their locations.

4. A method according to claim 1 or claim 2, wherein the objective significance of the enquiry location is used to determine the coverage of the search as follows, in precedence order:
- where the objective significance of the enquiry location is a trading premises, the search is at least initially made only in respect of the trading premises concerned;
- where the objective significance of the enquiry location is a shopping zone, the search is at least initially made only in respect of trading premises in the shopping zone concerned;
- otherwise, other search strategies are applied.

5. A method according to any one of the preceding claims, wherein the enquirer specifies a degree of immediacy associated with the enquiry, this degree of immediacy being used to influence the coverage of the search (85).

6. A method according to any one of the preceding claims, wherein the service system (40) has a database of local traders (45) giving contact details of their on-line database systems (90), the search (85) involving consulting the database of local traders and then contacting the on-line database systems (90) of the traders determined as being within the coverage set for the search and trading in items at least of the general type relevant to the enquiry.

7. A method according to any one of the preceding claims, wherein the enquiry concerns the availability of specified goods or services.

8. A method according to claim 7, wherein the enquiry includes a maximum price limit to be satisfied in respect of said goods or services.

9. A method according to any one of the preceding claims, wherein the enquirer submits the enquiry using a cellular mobile radio device (20) to pass the enquiryvia a mobile radio infrastructure (10) to the service system (40).

10. A method according to claim 9, wherein the location of the enquiry is determined by requesting the location of the mobile radio device (20) from a location server (67) of the mobile radio infrastructure (20).

11. A shopping-assistance service system (40), comprising:
- an input subsystem (41) for receiving a shopping enquiry from a remote enquirer;
- a location subsystem for determining the geographic location of the enquiry;
- search location-coverage means operative to use the enquiry location to determine what locations are to be covered in a search for an answer to the shopping enquiry;
- a search subsystem (42) for carrying out said search in conformity with the coverage determined by the search location-coverage means; and
- an output subsystem (41) for returning the search results to the enquirer;
**characterised in that** the search location-coverage means comprises:
- a database subsystem (46) for attributing an objective significance to the enquiry location through a database lookup, this objective significance being indicative of a functional purpose associated with the enquiry location, and
- means for determining the search coverage on the basis ofthe objective significance of the enquiry location.

12. A system according to claim 11, wherein the database subsystem (46) comprises a database of traders and their locations, the step of attributing a significance to the enquiry involving effecting a lookup in the trader database.

13. A system according to claim 11, wherein the search location-coverage means is operative to use the objective significance ofthe enquiry location to control the coverage of the search as follows, in precedence order:
- where the objective significance of the enquiry location is a trading premises, the search coverage is at least initially restricted to the trading premises concerned;
- where the objective significance of the enquiry location is a shopping zone, the search coverage is at least initially restricted trading premises in the shopping zone concerned;
- otherwise, other search coverage strategies are applied.

14. A system according to any one of claims 11 to 13, wherein the service system (40) has a database of local traders giving contact details of their on-line database systems (90), the search subsystem (42) being operative to consult the database of local traders (45) and then contact the on-line database systems (90) of the traders that are determined as being within the coverage set for the search and trading in items at least of the general type relevant to the enquiry.

## Patentansprüche

1. Ein Einkaufsunterstützungsverfahren, das die folgenden Schritte aufweist, die durch ein Servicesystem (40) ausgeführt werden:
Empfangen einer Einkaufsanforderung von einem entfernten Anforderer;
Erhalten (80) des geographischen Orts der Anforderung;
Verwenden des Anforderungsortes, um zu bestimmen (81-83), welche Orte bei einer Suche nach einer Antwort auf die Einkaufsanforderung abgedeckt werden sollen;
Ausführen der Suche (85) in Übereinstimmung mit der bestimmten Abdeckung; und
Zurückgeben der Suchergebnisse an den Anforderer,
**dadurch gekennzeichnet, daß** die Abdeckung der Suche in Abhängigkeit von einer objektiven Bedeutung bestimmt wird, die dem Anforderungsort durch einen Datenbanknachschlag (81) zugeteilt ist, wobei diese objektive Bedeutung einen Funktionszweck anzeigt, der dem Anforderungsort zugeordnet ist.

2. Ein Verfahren gemäß Anspruch 1, bei dem die Anforderungsortbedeutung verwendet wird, um die Abdeckung der Suche zu bestimmen, indem dieselbe verwendet wird, um eines oder mehrere der folgenden Elemente als einen Suchparameter einzustellen:
bestimmte Handelsgelände;
eine bestimmte Einkaufszone.

3. Ein Verfahren gemäß Anspruch 1 oder 2, bei dem ein Zuweisen einer objektiven Bedeutung zu dem Anforderungsort ein Prüfen einer Datenbank von Händlern und ihren Orten beinhaltet.

4. Ein Verfahren gemäß Anspruch 1 oder 2, bei dem die objektive Bedeutung des Anforderungsortes verwendet wird, um die Abdeckung der Suche wie folgt in einer Vorrangsreihenfolge zu bestimmen:
wenn die objektive Bedeutung des Anforderungsortes ein Handelsgelände ist, wird die Suche zumindest zu Beginn nur in bezug auf das betroffene Handelsgelände durchgeführt;
wenn die objektive Bedeutung des Anforderungsortes eine Einkaufszone ist, wird die Suche zumindest zu Beginn nur in bezug auf ein Handelsgelände in der betroffenen Einkaufszone durchgeführt;
andernfalls werden andere Suchstrategien angewendet.

5. Ein Verfahren gemäß einem der vorhergehenden Ansprüche, bei dem der Anforderer einen Grad an Unmittelbarkeit spezifiziert, der der Anforderung zugeordnet wird, wobei dieser Grad an Unmittelbarkeit verwendet wird, um die Abdeckung der Suche (85) zu beeinflussen.

6. Ein Verfahren gemäß einem der vorhergehenden Ansprüche, bei dem das Servicesystem (40) eine Datenbank lokaler Händler (47) aufweist, die Kontaktdetails ihrer Online-Datenbanksysteme (90) liefert, wobei die Suche (85) ein Befragen der Datenbank lokaler Händler und ein darauffolgendes Kontaktieren der Online-Datenbanksysteme (90) der Händler beinhaltet, von denen bestimmt wurde, daß sie innerhalb der Abdeckung sind, die für die Suche eingestellt ist, und die mit Gegenständen zumindest des allgemeinen Typs handeln, die für die Anforderung relevant sind.

7. Ein Verfahren gemäß einem der vorhergehenden Ansprüche, bei dem die Anforderung die Verfügbarkeit spezifizierter Güter oder Dienste betrifft.

8. Ein Verfahren gemäß Anspruch 7, bei dem die Anforderung eine maximale Preisgrenze, die erfüllt werden soll, bezüglich der Güter oder Dienste umfaßt.

9. Ein Verfahren gemäß einem der vorhergehenden Ansprüche, bei dem der Anforderer die Anforderung unter Verwendung einer Zellular-Mobilfunkvorrichtung (20) vorlegt, um die Anforderung über eine Mobilfunkinfrastruktur (10) an das Servicesystem (40) zu leiten.

10. Ein Verfahren gemäß Anspruch 9, bei dem der Ort der Anforderung durch ein Anfordern des Ortes der Mobilfunkvorrichtung (20) von einem Ortsserver (67) der Mobilfunkinfrastruktur (20) bestimmt wird.

11. Ein Einkaufsunterstützungsservicesystem (40) mit folgenden Merkmalen:
einem Eingangsteilsystem (41) zum Empfangen einer Einkaufsanforderung von einem entfernten Anforderer;
einem Ortsteilsystem zum Bestimmen des geographischen Ortes der Anforderung;
einer Suchortsabdeckungseinrichtung, die wirksam ist, um den Anforderungsort zu verwenden, um zu bestimmen, welche Orte bei einer Suche nach einer Antwort auf die Einkaufsanforderung abgedeckt werden sollen;
einem Suchteilsystem (42) zum Ausführen der Suche in Übereinstimmung mit der Abdeckung, die durch die Suchortsabdeckungseinrichtung bestimmt wird; und
einem Ausgangsteilsystem (41) zum Zurückgeben der Suchergebnisse an den Anforderer,
**dadurch gekennzeichnet, daß** die Suchortsabdeckungseinrichtung folgende Merkmale aufweist:
ein Datenbankteilsystem (46) zum Zuweisen einer objektiven Bedeutung zu dem Anforderungsort durch einen Datenbanknachschlag, wobei diese objektive Bedeutung einen Funktionszweck anzeigt, der dem Anforderungsort zugeordnet ist, und
eine Einrichtung zum Bestimmen der Suchabdeckung auf der Basis der objektiven Bedeutung des Anforderungsorts.

12. Ein System gemäß Anspruch 11, bei dem das Datenbankteilsystem (46) eine Datenbank von Händlern und ihren Orten aufweist, wobei der Schritt eines Zuweisens einer Bedeutung zu der Anforderung ein Bewirken eines Nachschlags in der Händlerdatenbank beinhaltet.

13. Ein System gemäß Anspruch 11, bei dem die Suchortsabdeckungseinrichtung wirksam ist, um die objektive Bedeutung des Anforderungsortes zu verwenden, um die Abdeckung der Suche wie folgt in einer Vorrangsreihenfolge zu steuern:
wenn die objektive Bedeutung des Anforderungsortes ein Handelsgelände ist, ist die Suchabdeckung zumindest zu Beginn auf das betroffene Handelsgelände eingeschränkt;
wenn die objektive Bedeutung des Anforderungsortes eine Einkaufszone ist, ist die Suchabdeckung zumindest zu Beginn auf ein Handelsgelände in der betroffenen Einkaufszone eingeschränkt;
andernfalls werden andere Suchabdeckungsstrategien angewendet.

14. Ein System gemäß einem der Ansprüche 11 bis 13, bei dem das Servicesystem (40) eine Datenbank lokaler Händler aufweist, die Kontaktdetails ihrer Online-Datenbanksysteme (90) liefert, wobei das Suchteilsystem (42) wirksam ist, um die Datenbank lokaler Händler (45) zu befragen und dann die Online-Datenbanksysteme (90) der Händler zu kontaktieren, von denen bestimmt wurde, daß sie innerhalb der Abdeckung sind, die für die Suche eingestellt ist, und die mit Gegenständen zumindest des allgemeinen Typs handeln, die relevant für die Anforderung sind.

## Revendications

1. Procédé d'assistance à l'achat, comprenant les étapes suivantes effectuées par un système de service (40) :
- la réception d'une demande d'achat à partir d'un demandeur à distance ;
- l'obtention (80) de la position géographique de la demande ;
- l'utilisation de la position de la demande pour déterminer (81 à 83) quelles positions doivent être couvertes par une recherche de réponse à la demande d'achat ;
- l'application de ladite recherche (85) en conformité avec la couverture déterminée ; et
- le renvoi des résultats de recherche au demandeur ;
**caractérisé en ce que** la couverture de la recherche est déterminée selon une importance objective attribuée à la position de demande par l'intermédiaire d'une consultation de base de données (81), cette importance objective indiquant un but fonctionnel associé à la position de demande.

2. Procédé selon la revendication 1, selon lequel l'importance de position de demande est utilisée. pour déterminer la couverture de la recherche utilisée pour établir un ou plusieurs des paramètres suivants comme paramètre de recherche :
- des locaux commerciaux particuliers ;
- une zone commerciale particulière.

3. Procédé selon la revendication 1 ou 2, selon lequel l'attribution d'une importance objective à la position de demande implique la vérification d'une base de données de commerciaux et de leurs positions.

4. Procédé selon la revendication 1 ou 2, selon lequel l'importance objective de la position de demande est utilisée pour déterminer la couverture de recherche comme suit selon l'ordre de priorité :
- lorsque l'importance objective de la position de demande est un local commercial, la recherche est effectuée au moins initialement selon seulement les locaux commerciaux concernés ;
- lorsque l'importance objective de la position de demande est une zone commerciale, la recherche est effectuée au moins initialement seulement selon les locaux commerciaux dans la zone commerciale concernée ;
- dans les autres cas, d'autres stratégies de recherche sont appliquées.

5. Procédé selon l'une quelconque des revendications précédentes, selon lequel le demandeur spécifie un degré d'urgence associé à la demande, ce degré d'urgence étant utilisé pour influencer la couverture de recherche (85).

6. Procédé selon l'une quelconque des revendications précédentes, selon lequel le système de. service (40) comprend une base de données de négociants locaux (45) fournissant des détails de contact de leurs systèmes de base de données en ligne (90), la recherche (85) comprenant la consultation de la base de données de négociants locaux puis la prise de contact avec les systèmes de base de données en ligne (90) des négociants déterminés comme se trouvant à l'intérieur de la zone de couverture pour la recherche et la reprise d'articles au moins du type général concernant la demande.

7. Procédé selon l'une quelconque des revendications précédentes, selon lequel la demande concerne la disponibilité de biens ou de services spécifiés.

8. Procédé selon la revendication 7, selon lequel la demande comprend une limite maximale de prix à satisfaire en ce qui concerne lesdits biens ou services.

9. Procédé selon l'une quelconque des revendications précédentes, selon lequel le demandeur soumet la demande à l'aide d'un dispositif radio mobile cellulaire (20) pour faire passer la demande par l'intermédiaire d'une infrastructure radio mobile (10) vers le système de service (40).

10. Procédé selon la revendication 9, selon lequel la position de la demande est déterminée par interrogation de la position du dispositif radio mobile (20) à partir d'un serveur de position (67) de l'infrastructure radio mobile (20).

11. Système de service d'assistance à l'achat (40), comprenant :
- un système secondaire d'entrée (41) pour recevoir une demande d'achat à partir d'un demandeur à distance ;
- un système secondaire de position pour déterminer la position géographique de la demande ;
- un moyen de couverture de recherche de position prévu pour utiliser la position de demande afin de déterminer quelles positions doivent être couvertes lors d'une recherche pour une réponse à la demande d'achat ;
- un système secondaire de recherche (42) pour effectuer ladite recherche selon la couverture déterminée par le moyen de couverture de recherche de position ; et
- un système secondaire de sortie (41) pour renvoyer les résultats de la recherche au demandeur ;
**caractérisé en ce que** le moyen de couverture de recherche de position comprend :
- un système secondaire de base de données (46) pour attribuer une importance objective à la position de demande par l'intermédiaire d'une consultation de base de données, cette importance objective représentant un but fonctionnel associé à la position de demande ; et
- un moyen pour déterminer la couverture de recherche sur la base de l'importance objective de la position de demande.

12. Système selon la revendication 11, dans lequel le système secondaire de base de données (46) comprend une base de données de commerciaux et leurs positions, l'étape d'attribution d'une importance à la demande impliquant une consultation de la base de données de commerciaux.

13. Système selon la revendication 11, dans lequel le moyen de couverture de recherche de position est prévu pour utiliser l'importance objective de la position de demande pour commander la couverture de la recherche. comme suit, dans l'ordre prioritaire :
- lorsque l'importance objective de la position de demande est un local commercial, la couverture de recherche est au moins initialement restreinte aux locaux commerciaux concernés ;
- lorsque l'importance objective de la position de demande est une zone commerciale, la couverture de recherche est au moins initialement restreinte aux locaux commerciaux dans la zone commerciale concernée ;
- dans les autres cas, d'autres stratégies de couverture de recherche sont appliquées.

14. Système selon l'une quelconque des revendications 11 à 13, dans lequel le système de service (40) possède une base de données de commerciaux locaux fournissant des détails de contact de leurs systèmes de base de données en ligne (90), le système secondaire de recherche (42) étant prévu pour consulter la base de données de commerciaux locaux (45) puis pour contacter les systèmes de base de données en ligne (90) des commerciaux qui sont déterminés comme étant dans l'ensemble de couverture de la recherche et la reprise d'articles au moins du type général concernant la demande.
